# FASCICULE DE BREVET EUROPEEN

(11) **EP 1 449 417 B1**
(45) Date de publication et mention de la délivrance du brevet: **21.03.2012**
(21) Numéro de dépôt: 03013797.0
(22) Date de dépôt: 18.06.2003
(51) Int. Cl.: A01B 3/42

(54) **Dispositif de fixation d'une roue de terrage au châssis d'une charrue à socs réversibles, permettant sa manoeuvre positive en retournement, en profondeur de terrage et en position de transport**
Den Dreh-, Stütz-, und Transportvorgang ermöglichende Vorrichtung zum Befestigen eines Stützrads an einem Drehpfluggestell
Device for fixing a ground support wheel to a reversible plough chassis enabling reversing, supporting and transporting

(30) Priorité: 21.02.2003 FR 0302279
(43) Date de publication de la demande: 25.08.2004
(73) Titulaire: Etablissements Gregoire Besson et Cie, 49230 Montfaucon-sur-Moine (FR)
(72) Inventeur: Fraboulet, Anthony, 49110 Saint Pierre Montlimart (FR)
(74) Mandataire: Laget, Jean-Loup

(56) Documents cités:
- EP-A- 0 075 087
- DE-B- 1 197 662
- FR-A- 2 595 182
- US-A- 2 869 653

## Description

La présente invention a pour objet un dispositif de fixation d'une roue de terrage sur le châssis tournant d'une charrue tractable à socs fixes réversibles.

On rappelle que l'on connaît dans le domaine du charruage des charrues tractables à socs fixes réversibles. De telles charrues sont principalement composées d'un châssis équipé de moyens de montage sur un véhicule tracteur, ledit châssis étant porteur de deux rampes opposées de socs respectifs, et d'une roue de terrage pour le réglage de la profondeur de labourage des socs en cours de travail. Ledit châssis est monté tournant sur le véhicule tracteur pour placer en alternance lesdites rampes de socs en position de travail selon la situation à droite ou à gauche des rampes de socs par rapport au sens de progression du véhicule tracteur, le versoir des socs d'une rampe étant orienté en opposition par rapport au versoir des socs de l'autre rampe. Pour retourner lesdites rampes de socs, le châssis est dans un premier temps soulevé au-delà du sol, puis est retourné pour inverser la position des rampes de socs entre une position de travail et une position dite « en l'air », puis le châssis est abaissé vers le sol. On comprendra que ces opérations sont effectuées à l'occasion d'une inversion de la progression du véhicule par rapport au champ à labourer, et donc de la situation susvisée des rampes de socs en cours de travail, à droite ou à gauche par rapport audit sens de progression du véhicule.

Un problème posé réside dans le changement d'orientation de la roue de terrage lors du mouvement tournant du châssis visant à alterner les positions de travail respectives des rampes de socs. Plus particulièrement, la roue de terrage étant orientée en position de travail transversalement à l'axe de retournement des rampes de socs, il est nécessaire de l'orienter en correspondance vers les socs de l'une et alternativement l'autre desdites rampes, consécutivement au retournement de ces dernières.

Une première solution, telle que proposée par le document EP0119407 (RABEWERK), consiste à équiper chacune desdites rampes de socs d'une roue de terrage respective.

Une solution plus courante consiste à relier la roue de terrage au châssis de manière pendulaire, pour sa mise en position de travail spontanée consécutivement au retournement des rampes de socs. Cependant, la roue de terrage devant être maintenue suivant une orientation en situation de travail vers l'arrière par rapport au sens de progression du véhicule, sa mise en position spontanée lors du retournement des rampes, en raison de son montage pendulaire, tend de manière aléatoire à autoriser son basculement suivant une orientation inadaptée, vers l'avant du véhicule.

Pour remédier à cet inconvénient, il a été proposé d'équiper la roue de terrage de moyens pour limiter sa course pendulaire de l'une à l'autre des positions de retournement des rampes de socs. Par exemple, il est proposé par le document FR2712455 (LEMKEN KG) d'équiper la roue de terrage d'une chaîne de retenue. Par exemple encore, il est proposé par le document DE3510527 (BAYERISCHE PFLUGFABRIK Gmbh) d'équiper la roue de terrage d'un organe élastique de compression, pour d'une part limiter la course de la roue de terrage et d'autre part freiner son mouvement de chute lors du retournement des rampes de socs.

On notera aussi qu'il est connu d'équiper les roues de terrage de moyens de réglage de leur position de terrage, c'est à dire de leur position relative par rapport aux socs qui détermine la profondeur de pénétration de ces derniers dans le sol. On pourra notamment se reporter aux documents DE4103288 (NIEMEYER) et FR2372581 (RABEWERK) qui décrivent des roues de terrage équipées de tels moyens de réglage.

On notera enfin qu'il est connu d'équiper la roue de terrage de moyens de suspension, mettant en oeuvre notamment un vérin hydraulique ou analogue, pour favoriser sa tenue au sol. On pourra par exemple se reporter au document DE4031503 (PFLUGFABRIK LEMKEN KG).

Le but de la présente invention est de proposer un dispositif de fixation d'une roue de terrage au châssis tournant d'une charrue à socs réversibles, qui permettent de façon certaine d'orienter la roue vers l'arrière par rapport au sens de progression du véhicule, consécutivement au retournement desdits socs.

La démarche inventive de la présente invention a consisté dans sa globalité à rompre les habitudes prises dans le domaine consistant à monter de manière pendulaire ladite roue de terrage sur ledit châssis tournant, en proposant des moyens de fixation de la roue de terrage au châssis qui, d'une part offrent un maintien ferme de la roue de terrage lors du retournement des rampes de socs, et d'autre part manoeuvrent la roue de terrage pour son inclinaison vers le sol en situation de travail, après retournement des rampes de socs.

Se pose un problème à résoudre d'une manoeuvre aisée de la roue de terrage après retournement des rampes de socs, mettant en oeuvre des moyens de structure simple, compte tenu de l'inversion de la position de la roue entre sa situation de travail et sa situation retournée concomitante au retournement des rampes de socs.

Poursuivant la démarche inventive susvisée, il est proposé d'agencer lesdits moyens de fixation de la roue de terrage sur le châssis de sorte que ladite roue de terrage soit placée lors du retournement dans une position médiane entre ses inclinaisons respectives vers l'une et l'autre des rampes de socs, et d'exploiter le poids de la roue pour favoriser son passage depuis ladite position médiane vers sa position inclinée de travail, tout en étant positivement manoeuvrée par lesdits moyens de fixation.

Selon la présente invention, telle que revendiquée, un dispositif de fixation d'une roue de terrage au châssis d'une charrue à socs réversibles, ledit châssis étant porteur de deux rampes opposées de socs respectifs et étant monté tournant sur un véhicule tracteur autour d'un axe de retournement pour en alternance placer par retournement lesdites rampes de socs en position de travail, est principalement reconnaissable en ce que ladite roue de terrage est portée en bascule par ledit châssis par l'intermédiaire d'un bras à bascule solidaire à l'une de ses extrémités d'un arbre de pivotement excentré de la roue de terrage sur le châssis, tandis que l'autre extrémité du dit bras à bascule est articulée sur l'un quelconque de la tête de tige et du corps d'un vérin hydraulique double effet, lui-même articulé sur ledit châssis.

Ces dispositions sont telles qu'une manoeuvre dudit vérin permet, au cours du retournement des rampes de socs, de maintenir sensiblement dans un même plan contenant ledit axe de retournement, d'une part l'axe de pivotement de la roue de terrage sur le châssis, et d'autre part le centre de gravité de la roue de terrage, et inversement qu'une manoeuvre inverse du vérin permet, postérieurement audit retournement, de manoeuvrer positivement en basculement la roue de terrage vers le sol, en exploitant le poids de cette dernière pour rompre ledit maintien coplanaire en provoquant naturellement une tendance du vérin à repousser ledit bras à bascule dans le sens correspondant.

On comprendra par manoeuvre positive, à l'inverse d'une manoeuvre passive spontanée, une manoeuvre de la roue de terrage en basculement qui est volontairement provoquée par un organe de puissance de manière contrôlée, le roue de terrage étant notamment maintenue et déplacée selon une course déterminée au moyen dudit vérin.

On comprendra que de manière analogue, lesdites liaisons articulées du vérin avec le bras à bascule d'une part et avec le châssis d'autre part, peuvent indifféremment être inversées de la tête de tige et/ou du corps du vérin sans pour autant déroger à la règle générale de l'invention énoncée.

Néanmoins une organisation des dites liaisons articulées du bras à bascule sur la tête de tige du vérin dont le corps est quant à lui articulé sur ledit châssis est préférée, en raison notamment mais de manière non restrictive, de la faculté offerte tel qu'il sera décrit plus loin, de pourvoir le vérin d'un organe de butée en vue du réglage de la profondeur de terrage.

On comprendra aussi que ledit maintien coplanaire est tel que l'axe général d'extension dudit vérin est préférentiellement contenu dans ledit plan coplanaire de maintien, l'axe d'articulation du bras à bascule sur le vérin et l'axe d'articulation du vérin sur le châssis étant notamment contenus en outre dans ledit plan.

Le dispositif de la présente invention comportant des moyens de réglage de la profondeur de terrage, ceux-ci sont avantageusement principalement organisés en moyens de limitation de course dudit vérin, pour autoriser une distance prédéterminée maximale entre l'axe d'articulation du vérin sur le châssis et l'axe d'articulation du bras à bascule sur le vérin.

Selon une première variante de réalisation, dans laquelle tel que susvisé le bras à bascule est articulé sur la tête de tige du vérin tandis que le corps du vérin est quant à lui articulé sur le châssis, lesdits moyens de limitation de course comprennent avantageusement une armature de mise en relation entre le bras à bascule et un curseur monté mobile le long du corps du vérin et immobilisable en une position déterminée. Selon diverses variantes, prises seules ou en combinaison, le curseur constitue un organe de butée pour ladite armature en sortie de tige du vérin, et/ou constitue un capteur de fin de course en sortie de tige du vérin, actionnable par ladite armature pour interrompre l'alimentation en fluide dudit vérin.

Ledit curseur est avantageusement constitué d'un écrou coopérant avec un filetage extérieur ménagé sur le corps du vérin. Ladite armature, quant à elle, prend avantageusement appui à son sommet contre l'axe d'articulation du bras à bascule sur la tête de tige du vérin, et comporte à sa base une semelle d'appui contre le curseur, ladite semelle étant enfilée de manière librement coulissante sur le corps du vérin.

L'armature et le corps du vérin sont en outre de préférence coaxialement articulés sur le châssis, pour favoriser leur mobilité conjointe en pivotement autour de l'axe d'articulation du corps du vérin sur le châssis.

Selon une deuxième variante de réalisation desdits moyens de limitation de course, ceux-ci comprennent des moyens de contrôle et de commande de la mise en oeuvre dudit vérin, lesdits moyens de contrôle et de commande associant des organes de limitation de la course de la tige du vérin et des moyens de commande distants localisés à l'intérieur de l'habitacle du véhicule tracteur.

Selon diverses variantes, lesdits organes de limitation de course sont par exemple constitués de butées hydrauliques, telles que du type de butées incorporées audit vérin, ou encore de capteurs de position associés auxdits moyens de commande, la limitation de course étant commandée électriquement depuis l'habitacle du véhicule.

Selon l'invention, la roue de terrage est solidarisée audit bras à bascule par l'intermédiaire de moyens de liaison facilement réversible, de sorte que ladite liaison puisse être rompue entre ladite position de travail et une position de transport, dans laquelle position de transport la roue de terrage est articulée de manière librement pivotante autour d'un axe A3 de rotation coaxial à l'arbre de pivotement, pour notamment autoriser un accompagnement directionnel de la roue de terrage lors d'un changement de direction du véhicule.

Lesdits moyens de liaison facilement réversible sont par exemple du type par brochage, ou du type de moyens analogues, de la roue de terrage sur l'arbre de pivotement, notamment par l'intermédiaire d'un support d'un bras porteur de la roue de terrage assemblé par brochage à l'arbre de pivotement en position de travail de la roue de terrage. On relèvera cependant que de manière analogue, quoique rendant la structure du dispositif de l'invention plus complexe pour la mise en position de la roue de terrage en position de transport, la liaison facilement réversible entre la roue de terrage et le bras à bascule est susceptible d'être matérialisée entre deux quelconques éléments successifs compris entre la roue de terrage et l'arbre à bascule, tel que par exemple entre ce dernier et l'arbre de pivotement.

Selon une forme préférée de réalisation de l'organisation dudit brochage, la roue de terrage est supportée par l'arbre de pivotement par l'intermédiaire d'un support solidaire d'un bras de roue porteur de la roue de terrage. Ledit support comprend un fût pour sa liaison coaxiale avec l'arbre de pivotement, lesdits moyens de liaison facilement réversible comprenant quant à eux une broche amovible pour alternativement, soit lier en rotation le fût à l'arbre de pivotement en position de travail, soit libérer en rotation le fût par rapport à l'arbre de pivotement en position de transport.

En outre, ledit support comprend préférentiellement une tête intermédiaire de fixation dudit bras de roue sur le fût, ladite tête de fixation étant manoeuvrable entre deux positions correspondantes audites positions de travail et de transport, dans chacune desquelles positions la tête de fixation est solidarisable au fût, avantageusement par l'intermédiaire de ladite broche amovible, et dans lesquelles positions l'axe de rotation sur elle-même de la roue de terrage est orienté sensiblement parallèlement audit axe A3 en position de travail et sensiblement orthogonalement audit axe A3 en position de transport.

La présente invention sera mieux comprise, et des détails en relevant apparaîtront, à la description qui va en être faite d'une forme préférée de réalisation, en relation avec les figures des planches annexées, dans lesquelles :
Les fig.1 à fig.5 sont des vues de côté d'une charrue à socs réversibles équipée d'un dispositif de fixation d'une roue de terrage selon une première forme de réalisation de l'invention, illustrant successivement les modalités de mise en oeuvre pour le retournement desdits socs.
Les fig.6 et fig.7 sont des vues en perspective du dispositif de fixation de la roue de terrage au châssis représenté sur les figures précédentes, respectivement en situation de travail et en situation de retournement de ladite roue de terrage.
Les fig.8 et fig.9 sont des vues d'un dispositif de fixation d'une roue de terrage selon une deuxième forme de réalisation de l'invention, respectivement en perspective éclatée et en perspective assemblée, illustrant la roue de terrage en position de travail du sol,
Les fig.10 et fig.11 sont des vues du dispositif représenté sur les fig.8 et fig.9, respectivement en perspective éclatée et en perspective assemblée, illustrant la roue de terrage en position de transport.

Sur les figures, une charrue à socs réversibles comprend un châssis 1 porteur de deux rampes opposées de socs respectifs 2 et 3. Le châssis 1 est monté tournant sur un véhicule tracteur autour d'un axe A1 de retournement des rampes de socs 2 et 3 entre une position de travail et une position dite « en l'air », par l'intermédiaire d'une platine 4 pourvue des points de fixation habituels sur le véhicule tracteur. Ledit châssis 1 est aussi monté sur ladite platine 4 de manière à pouvoir être alternativement, soit relevé tel qu'illustré sur les figures, soit abaissé en situation de travail. Ledit châssis 1 est par ailleurs porteur d'une roue de terrage 5, qui est fixée sur le châssis 1 de manière à être positivement orientée vers le sol et vers l'arrière du véhicule.

A cet effet, la roue 5 est portée par le châssis 1 au moyen d'un support 6 , qui est articulé sur le châssis 1 autour d'un arbre 7 de pivotement à axe A3 excentré par rapport au centre de gravité C de la roue 5 sensiblement situé dans la zone de son axe de rotation. La roue 5 est manoeuvrée en pivotement excentré, par l'intermédiaire dudit support 6, au moyen d'un vérin hydraulique double effet 8, dont le corps 9 est articulé en pivotement sur le châssis 1 autour d'un axe A2, et dont la tête de tige 10 est articulée autour d'un axe A4 à l'une des extrémités d'un bras à bascule 11 dont l'autre extrémité est quant à elle solidaire dudit arbre 7 de pivotement de la roue 5.

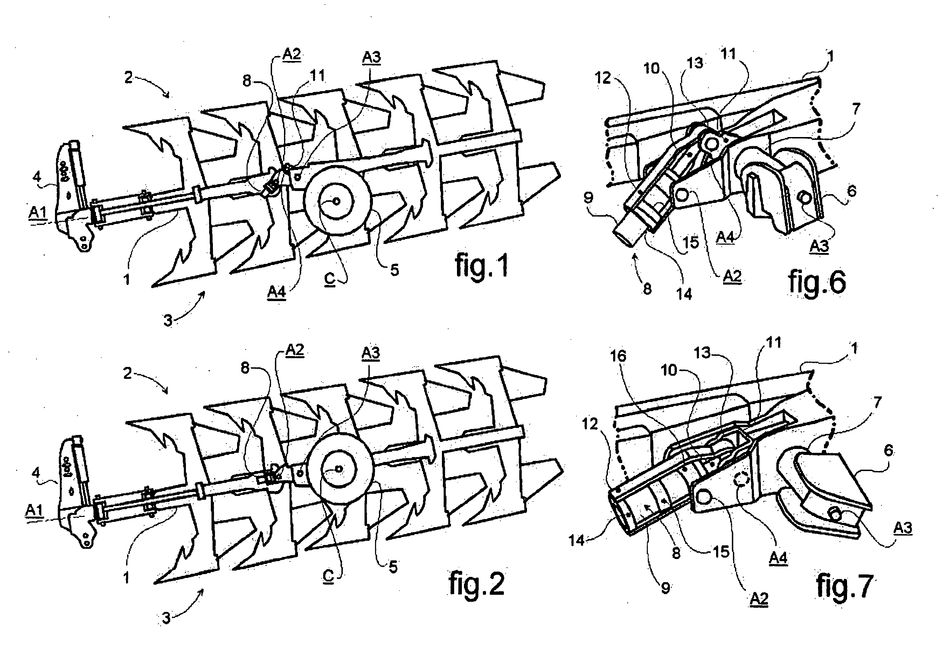

Plus particulièrement sur la fig.1, la roue 5 est en situation de travail, en étant maintenue inclinée par ledit vérin 8 vers le sol et vers l'arrière du véhicule. Dans une première étape, le châssis 1 est relevé, tel qu'illustré sur la figure.

Sur la fig.2, la roue 5 est positivement manoeuvrée par ledit vérin 8 de manière à placer sensiblement dans un même plan, contenant l'axe A1 de retournement dudit châssis 1, ledit axe A3 de pivotement excentré de la roue 5 et le centre C de gravité de cette dernière. On relèvera que sur l'exemple préféré de réalisation illustré, le vérin 8 est orienté de manière à placer son axe général d'extension dans le dit plan commun à l'axe A1 de retournement dudit châssis 1, à l'axe A3 de pivotement excentré de la roue 5 et au centre C de gravité de cette dernière.

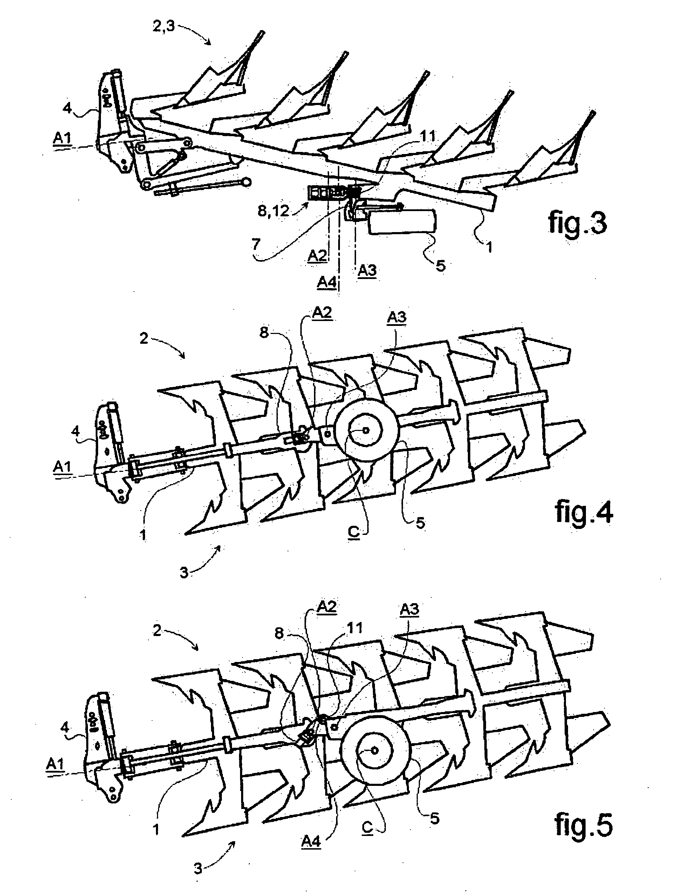

Sur la fig.3, le châssis 1 est retourné autour de l'axe A1 de retournement, en vue d'inverser l'orientation des rampes de socs 2 et 3. On comprendra que l'axe de retournement A1 du châssis 1, l'axe A3 de pivotement excentré de la roue 5 et le centre C de gravité de cette dernière 5 sont toujours sensiblement maintenus coplanaires.

Sur la fig.4, le retournement du châssis 1 étant achevé, la roue 5 est placée dans une position équivalente à la position illustrée sur la fig.2, sa zone prévue de contact avec le sol étant néanmoins inversée.

Sur la fig.5, la roue 5 est manoeuvrée par ledit vérin 8 pour lui conférer sa position inclinée en situation de travail.

En se reportant plus particulièrement sur les fig.6 et fig.7, le dispositif de fixation de la roue de terrage 5 sur le châssis 1 comprend principalement ledit arbre 7 de pivotement excentré de la roue, ledit vérin 8 et ledit bras à bascule 11. Ce dispositif comprend en outre une armature 12 est conformée en cage, qui comporte à son sommet une bride 13 de saisie de l'axe d'articulation A4 du bras à bascule 11 sur la tige 10 du vérin 8, duquel axe d'articulation A3 ladite bride 13 est solidaire en pivotement. Par ailleurs, ladite armature 12 comporte à sa base une semelle 14, qui est enfilée de manière librement coulissante sur le corps 9 du vérin 8, en vue de sa prise d'appui sur un écrou 15 coopérant avec un filetage ménagé sur le corps 9 du vérin 8. Ledit écrou 15, qui constitue un organe de butée pour la semelle 14 à l'encontre de la manoeuvre en sortie de tige du vérin 8, permet un réglage de la course du vérin 8, et, selon sa position choisie par l'utilisateur sur le corps 9 du vérin 8, permet un réglage de la position de terrage, c'est à dire de la profondeur de travail du sol par les socs. On remarquera aussi que l'armature 12 comporte dans sa zone médiane un collier 16 entourant le corps 9 dudit vérin 8, par l'intermédiaire duquel collier 16 l'armature 12 et le corps 9 de vérin 8 sont conjointement articulés sur le châssis 1.

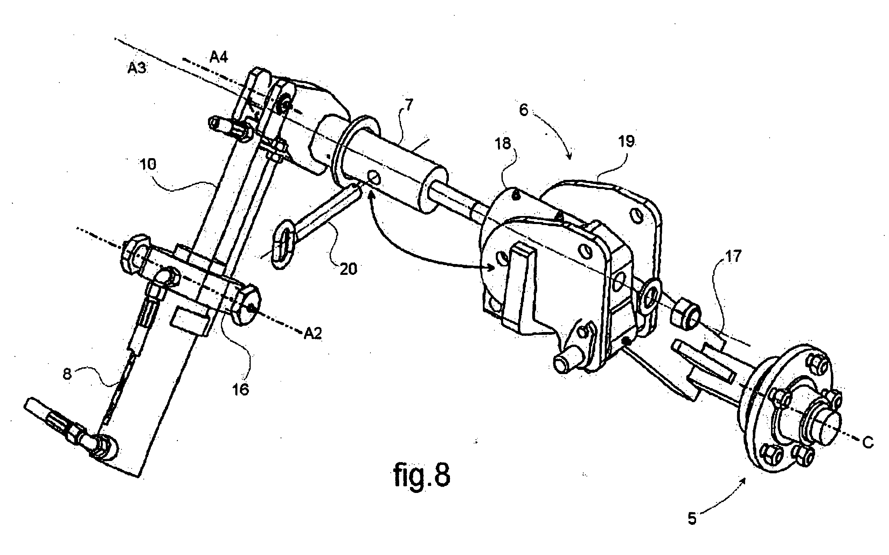

En se reportant plus particulièrement sur les fig.8 à fig.11, le dispositif de fixation de la roue de terrage 5 sur le châssis 1 comprend principalement ledit arbre 7 de pivotement excentré de la roue, ledit vérin 8 et ledit bras à bascule 11. On remarquera aussi la présence d'une bride 13 et d'un collier de fixation 16, qui sont analogues aux organes correspondant de la variante précédemment décrite.

Le vérin 8 est du type incorporant des butées hydrauliques (non représentées sur les figures), pour permettre de limiter la course de la tige 10 du vérin 8 à partir d'une commande opérée par l'utilisateur depuis l'habitacle du véhicule tracteur, en vue de régler la profondeur de travail des rampes de socs 2 et 3.

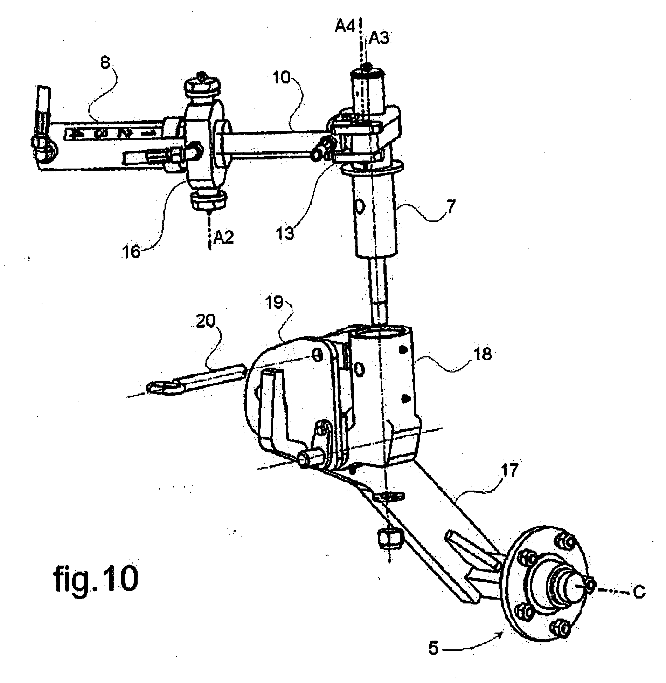

La roue de terrage 5, dont seul le moyeu est représenté sur les fig.8 et fig.10, est portée par un bras de roue 17 lui-même porté par ledit support 6, ce dernier 6 étant principalement composé d'un fût 18, enfilé sur l'arbre de pivotement 7 coaxialement à ce dernier suivant l'axe A3, et d'une tête de fixation 19 du bras de roue 17 sur le fût 18.

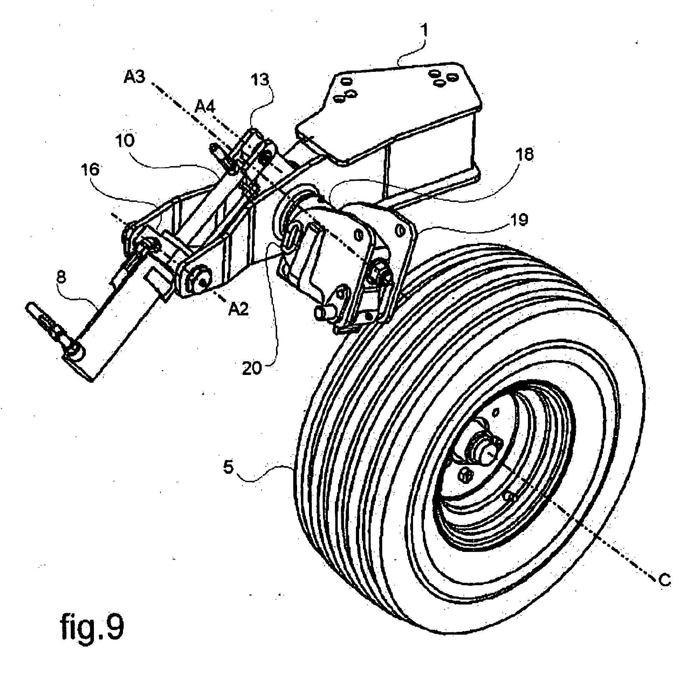

Sur les fig.8 et fig.9, la roue de terrage 5 est en position de travail, le fût 18 et la tête de fixation 19 étant conjointement liés en rotation avec l'arbre de pivotement 7, au moyen d'une broche amovible 20 les traversant. On remarquera que dans cette position, la tête de fixation 19 maintient le bras de roue 17 de sorte que l'axe de rotation (C) de la roue de terrage 5 soit sensiblement parallèle à l'axe A3 de l'arbre de pivotement 7.

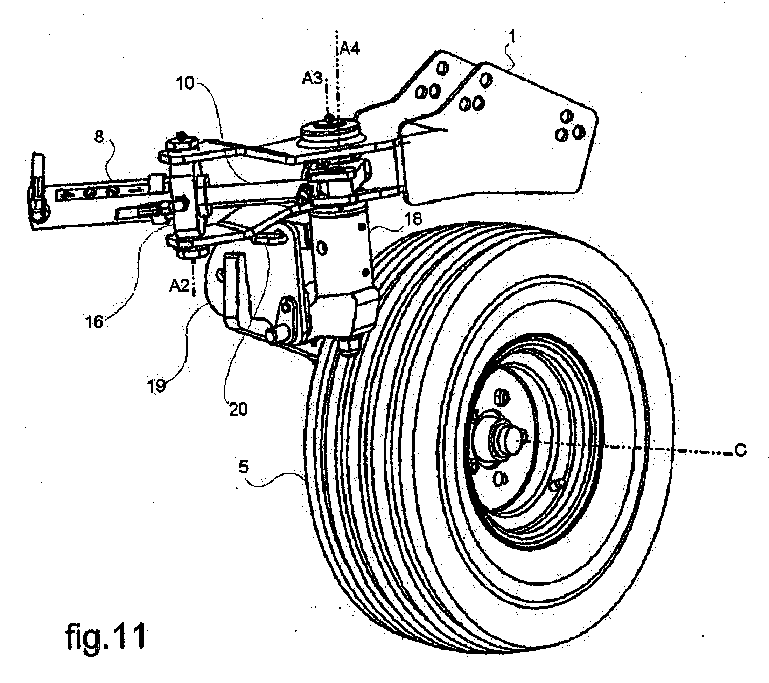

Sur les fig.10 et fig.11, la roue de terrage 5 est en position de transport, le fût 18 et la tête de fixation19 étant solidarisés l'un à l'autre au moyen de la broche amovible 20, le fût 18 étant néanmoins libre en rotation par rapport à l'arbre de pivotement 7.

Le passage de la roue de terrage 5 de la position de travail illustrée sur les fig.8 et fig.9, à la position de transport illustrée sur les fig.10 et fig.11, est obtenu à partir d'un pivotement de la tête de fixation 19 par rapport au fût 18, sur lequel elle est articulée, de sorte que l'axe (C) de rotation sur elle-même de la roue de terrage 5 soit sensiblement orienté orthogonalement à l'axe A3 de l'arbre de pivotement 7. Grâce à ces dispositions, et notamment grâce à ladite orientation de l'axe (C) de rotation sur elle-même de la roue de terrage 5 et de la liberté de rotation du fût 18 sur l'arbre de pivotement 7, la roue de terrage 5 est susceptible d'accompagner un changement de direction du véhicule.

## Revendications

1. Dispositif de fixation d'une roue de terrage (5) au châssis (1) d'une charrue à socs réversibles, ledit châssis (1) étant porteur de deux rampes opposées de socs respectifs (2,3) et étant monté tournant sur un véhicule tracteur autour d'un axe de retournement A 1 pour, en alternance, placer par retournement lesdites rampes de socs (2,3) en position de travail, ladite roue de terrage étant portée en bascule par ledit châssis (1) par l'intermédiaire d'un bras à bascule (11) solidaire à l'une de ses extrémités d'un arbre (7) de pivotement excentré de la roue de terrage (5) sur le châssis (1), tandis que l'autre extrémité dudit bras à bascule (11) est articulée à l'un quelconque de la tête de tige (10) et du corps (9) d'un vérin hydraulique double effet (8), lui-même articulé sur le châssis (1), de sorte qu'une manoeuvre dudit vérin (8) permet, au cours du retournement des rampes de socs (2,3), de maintenir sensiblement dans un même plan contenant ledit axe de retournement A 1, l'axe A2 de pivotement de la roue de terrage (5) sur le châssis (1) et le centre de gravité C de la roue de terrage (5), et inversement de sorte qu'une manoeuvre inverse dudit vérin (8) permet, postérieurement audit retournement, de manoeuvrer positivement en basculement la roue de terrage (5) vers le sol, en exploitant le poids de cette dernière pour rompre ledit maintien coplanaire en provoquant naturellement une tendance du vérin (8) à repousser ledit bras à bascule (11) dans le sens correspondant et comportant des moyens de réglage de la profondeur de terrage qui sont principalement organisés en moyens de limitation de course dudit vérin (8), pour autoriser une distance prédéterminée maximale entre l'axe d'articulation A2 du vérin (8) sur le chassis (1) et l'axe A4 d'articulation du bras à bascule (11) sur le vérin (8) **caractérisé en ce que** la roue de terrage (5) est solidarisée audit bras à bascule (11) par l'intermédiaire de moyens de liaison facilement réversible (20), de sorte que ladite liaison puisse être rompue entre ladite position de travail et une position de transport, dans laquelle position de transport la roue de terrage (5) est articulée de manière librement pivotante autour d'un axe A3 de rotation coaxial à l'arbre de pivotement (7).

2. Dispositif de fixation d'une roue de terrage au châssis d'une charrue à socs réversibles selon la revendication 1 **caractérisé en ce que** ledit bras à bascule (11) est articulé sur la tête de tige (10) du vérin (8), tandis que le corps (9) du vérin (8) est articulé sur ledit châssis (11) de sorte que l'axe général d'extension dudit vérin (8) soit contenu dans ledit plan coplanaire de maintien.

3. Dispositif de fixation d'une roue de terrage au châssis d'une charrue à socs réversibles selon la revendication 1 ou la revendication 2 **caractérisé en ce que** lesdits moyens de liaison (20) facilement réversible sont du type par brochage (20) de la roue de terrage (5) sur l'arbre de pivotement (7).

4. Dispositif de fixation d'une roue de terrage au châssis d'une charrue à socs réversibles selon la revendication 3 **caractérisé en ce que** la roue de terrage (5) est supportée par l'arbre de pivotement (7) par l'intermédiaire d'un support (6) solidaire d'un bras de roue (17) porteur de la roue de terrage (5), ledit support (6) comprenant un fût (18) pour sa liaison coaxiale avec l'arbre de pivotement (7), lesdits moyens de liaison facilement réversible comprenant une broche amovible (20) pour alternativement, soit lier en rotation le fût (18) à l'arbre de pivotement (7) en position de travail, soit libérer en rotation le fût (18) par rapport à l'arbre de pivotement (7) en position de transport.

5. Dispositif de fixation d'une roue de terrage au châssis d'une charrue à socs réversibles selon la revendication 4 **caractérisé en ce que** ledit support (6) comprend en outre une tête intermédiaire (19) de fixation dudit bras de roue (17) sur le fût (18), ladite tête de fixation (19) étant manoeuvrable entre deux positions correspondantes aux dites positions de travail et de transport, dans chacune desquelles positions la tête de fixation (19) est solidarisable au fût (18), et dans lesquelles positions l'axe (C) de rotation sur elle-même de la roue de terrage (5) est orienté sensiblement parallèlement audit axe A3 en position de travail et sensiblement orthogonalement audit axe A3 en position de transport.

6. Dispositif de fixation d'une roue de terrage au châssis d'une charrue à socs réversibles selon les revendications 1 à 5, **caractérisé en ce que** lesdits moyens de limitation de course comprennent une armature (12) de mise en relation entre le bras à bascule (11) et un curseur (15) monté mobile le long du corps (9) du vérin (8) et immobilisable en une position déterminée.

7. Dispositif de fixation d'une roue de terrage au châssis d'une charrue à socs réversibles selon la revendication 6, **caractérisé en ce que** le curseur (15) constitue un organe de butée pour ladite armature (12) en sortie de tige du vérin (8).

8. Dispositif de fixation d'une roue de terrage au châssis d'une charrue à socs réversibles selon l'une quelconque des revendications 6 à 7, **caractérisé en ce que** le curseur (15) constitue un capteur de fin de course en sortie de tige du vérin (8), actionnable par ladite armature (12) pour interrompre l'alimentation en fluide dudit vérin (8).

9. Dispositif de fixation d'une roue de terrage au châssis d'une charrue à socs réversibles selon l'une quelconque des revendications 7 à 8, **caractérisé en ce que** le curseur (15) est constitué d'un écrou coopérant avec un filetage extérieur ménagé sur le corps (9) du vérin (8).

10. Dispositif de fixation d'une roue de terrage au châssis d'une charrue à socs réversibles selon l'une quelconque des revendications 6 à 7, **caractérisé en ce que** ladite armature (12) prend appui à son sommet contre l'axe d'articulation du bras à bascule (11) sur la tête de tige (10) du vérin (8), et comporte à sa base une semelle (14) d'appui contre le curseur (15), ladite semelle (14) étant enfilée de manière librement coulissante sur le corps (9) du vérin (8).

11. Dispositif de fixation d'une roue de terrage au châssis d'une charrue à socs réversibles selon la revendication 10, **caractérisé en ce que** l'armature (12) et le corps (9) du vérin (8) sont en outre coaxialement articulés sur le châssis (1).

12. Dispositif de fixation d'une roue de terrage au châssis d'une charrue à socs réversibles selon les revendications 6 à 11, **caractérisé en ce que** l'armature (12) est conformée en cage comportant:
*) à son sommet une bride (13) de saisie de l'axe d'articulation du bras à bascule (11) sur la tige (10) du vérin (8), duquel axe d'articulation ladite bride (13) est solidaire en pivotement,
*) à sa base ladite semelle (14) enfilée de manière librement coulissante sur le corps (9) du vérin (8),
*) dans sa zone médiane un collier (16) entourant le corps (9) dudit vérin (8), par l'intermédiaire duquel collier (16) l'armature (12) et le corps (9) du vérin (8) sont conjointement articulés sur le châssis (1).

13. Dispositif de fixation d'une roue de terrage au châssis d'une charrue à socs réversibles selon l'une quelconque des revendications 1 à 2, **caractérisé en ce que** lesdits moyens de limitation de course comprennent des moyens de contrôle et de commande de la mise en oeuvre dudit vérin (8), lesdits moyens de contrôle et de commande associant des organes de limitation de la course de la tige (10) du vérin (8) et des moyens de commande distants localisés à l'intérieur de l'habitacle du véhicule tracteur.

## Claims

1. Device for fixing a consolidation wheel (5) to the chassis (1) of a reversible share plough, the chassis (1) carrying two respective opposing ploughshare inclinations (2, 3) and being mounted so as to rotate on a traction vehicle about an inversion axis A1 in order to alternately position, by means of inversion, the ploughshare inclinations (2, 3) in an operating position, the consolidation wheel being carried in a tilted manner by the chassis (1) by means of a tilting arm (11) which is fixedly joined at one of the ends thereof to a pivot shaft (7) which is offset from the consolidation wheel (5) on the chassis (1), whilst the other end of the tilting arm (11) is articulated to either the shank head (10) or the body (9) of a hydraulic dual-effect jack (8) which is itself articulated to the chassis (1), so that a manoeuvre of the jack (8), during inversion of the ploughshare inclinations (2, 3), allows retention substantially in the same plane containing the inversion axis A1, the pivot axis A2 of the consolidation wheel (5) on the chassis (1) and the centre of gravity C of the consolidation wheel (5) and conversely so that a transposed manoeuvre of the jack (8), after the inversion, allows the consolidation wheel (5) to be manoeuvred positively in a tilting manner towards the ground, using its weight to break the coplanar retention by bringing about a natural tendency of the jack (8) to urge the tilting arm (11) in the corresponding direction, and comprising means for adjusting the depth of consolidation which are principally organised as means for limiting the travel of the jack (8) in order to allow a maximum predetermined distance between the articulation axle A2 of the jack (8) on the chassis (1) and the articulation axle A4 of the tilting arm (11) on the jack (8), **characterised in that** the consolidation wheel (5) is fixedly joined to the tilting arm (11) by readily reversible connection means (20) so that the connection can be broken between the operating position and a transport position, in which transport position the consolidation wheel (5) is articulated so as to pivot freely about a rotation axis A3 which is coaxial relative to the pivot shaft (7).

2. Device for fixing a consolidation wheel to the chassis of a reversible share plough according to claim 1, **characterised in that** the tilting arm (11) is articulated to the shank head (10) of the jack (8), whilst the body (9) of the jack (8) is articulated to the chassis (11) so that the general extension axis of the jack (8) is contained in the coplanar retention plane.

3. Device for fixing a consolidation wheel to the chassis of a reversible share plough according to claim 1 or claim 2, **characterised in that** the readily reversible connection means (20) are of the type involving the consolidation wheel (5) being bound (20) to the pivot shaft (7).

4. Device for fixing a consolidation wheel to the chassis of a reversible share plough according to claim 3, **characterised in that** the consolidation wheel (5) is supported by the pivot shaft (7) by means of a support (6) which is fixedly joined to a wheel arm (17) which carries the consolidation wheel (5), the support (6) comprising a shaft (18) in order to coaxially connect it to the pivot shaft (7), the readily reversible connection means comprising a removable spindle (20) in order to alternately either rotatably connect the shaft (18) to the pivot shaft (7) in an operating position, or rotatably release the shaft (18) relative to the pivot shaft (7) in a transport position.

5. Device for fixing a consolidation wheel to the chassis of a reversible share plough according to claim 4, **characterised in that** the support (6) further comprises an intermediate head (19) for fixing the wheel arm (17) to the shaft (18), the fixing head (19) being able to be manoeuvred between two positions corresponding to the operating and transport positions, in each of which positions the fixing head (19) can be fixedly joined to the shaft (18) and in which positions the axle (C) for rotating the consolidation wheel (5) about itself is orientated substantially parallel with the axle A3 in an operating position and substantially orthogonally relative to the axle A3 in a transport position.

6. Device for fixing a consolidation wheel to the chassis of a reversible share plough according to claims 1 to 5, **characterised in that** the travel limitation means comprise a fitting (12) for producing a relationship between the tilting arm (11) and a sliding member (15) which is mounted so as to move along the body of the jack (8) and which can be fixed in a predetermined position.

7. Device for fixing a consolidation wheel to the chassis of a reversible share plough according to claim 6, **characterised in that** the sliding member (15) constitutes a stop member for the fitting (12) at the outlet of the jack shank (8).

8. Device for fixing a consolidation wheel to the chassis of a reversible share plough according to either claim 6 or claim 7, **characterised in that** the sliding member (15) constitutes a travel end sensor at the outlet of the jack shank (8), which can be actuated by the fitting (12) in order to interrupt the fluid supply of the jack (8).

9. Device for fixing a consolidation wheel to the chassis of a reversible share plough according to either claim 7 or claim 8, **characterised in that** the sliding member (15) is constituted by a nut which co-operates with an outer thread provided on the body (9) of the jack (8).

10. Device for fixing a consolidation wheel to the chassis of a reversible share plough according to either claim 6 or claim 7, **characterised in that** the fitting (12) is in abutment at the tip thereof against the articulation axle of the tilting arm (11) on the shank head (10) of the jack (8) and comprises at the base thereof a plate (14) for abutment against the sliding member (15), the plate (14) being fitted so as to slide freely on the body (9) of the jack (8).

11. Device for fixing a consolidation wheel to the chassis of a reversible share plough according to claim 10, **characterised in that** the fitting (12) and the body (9) of the jack (8) are further coaxially articulated to the chassis (1).

12. Device for fixing a consolidation wheel to the chassis of a reversible share plough according to claims 6 to 11, **characterised in that** the fitting (12) is of cage-like form comprising:
*) at the tip thereof a flange (13) for gripping the articulation axle of the tilting arm (11) on the shank (10) of the jack (8), to which articulation axle the flange (13) is fixedly joined so as to pivot,
*) at the base thereof, the plate (14) which is fitted so as to slide freely on the body (9) of the jack (8),
*) in the central zone thereof, a collar (16) which surrounds the body (9) of the jack (8) by means of which collar (16) the fitting (12) and the body (9) of the jack (8) are jointly articulated to the chassis (1).

13. Device for fixing a consolidation wheel to the chassis of a reversible share plough according to either claim 1 or claim 2, **characterised in that** the travel limitation members comprise means for controlling and commanding the operation of the jack (8), the control and command means associating travel limitation members of the shank (10) of the jack (8) and remote command means located inside the passenger space of the traction vehicle.

## Patentansprüche

1. Vorrichtung zur Befestigung eines Stützrades (5) an dem Pflugrahmen (1) eines Kehrpfluges, wobei der Pflugrahmen (1) zwei einander gegenüberliegende Pflugscharreihen (2, 3) trägt und drehend um eine Wendeachse A1 an einer Zugmaschine angebaut ist, um die Pflugscharreihen (2, 3) durch Wenden abwechselnd in die Arbeitsstellung zu bringen, wobei das Stützrad über einen Kipparm (11), der an einem seiner Enden mit einer exzentrischen Schwenkwelle (7) des Stützrades (5) an dem Pflugrahmen (1) verbunden ist, schwenkbar von dem Pflugrahmen (1) getragen wird, während das andere Ende des Kipparmes (11) mit dem Kopf der Stange (10) und dem Gehäuse (9) eines doppelt wirkenden Hydraulikzylinders (8) gelenkig verbunden ist, der wiederum mit dem Pflugrahmen (1) gelenkig verbunden ist, so dass eine Betätigung des Zylinders (8) es beim Wenden der Pflugscharreihen (2, 3) ermöglicht, die Schwenkachse A2 des Stützrades (5) an dem Pflugrahmen (1) und den Schwerpunkt C des Stützrades (5) im Wesentlichen in einer Ebene mit der Wendeachse A1 zu halten, und umgekehrt, so dass eine umgekehrte Betätigung des Zylinders (8) es nach dem Wenden ermöglicht, das Stützrad (5) durch Kippen auf den Boden zu bewegen, indem das Gewicht des Stützrades ausgenutzt wird, um das Halten in einer Ebene zu lösen, indem eine Bestrebung des Zylinders (8), den Kipparm (11) in die entsprechende Richtung zu schieben, auf natürliche Weise herbeigeführt wird, und mit Mitteln zur Einstellung der Arbeitstiefe, die hauptsächlich als Mittel zur Begrenzung des Hubs des Zylinders (8) ausgebildet sind, um einen vorbestimmten Höchstabstand zwischen der Schwenkachse A2 des Zylinders (8) an dem Pflugrahmen (1) und der Schwenkachse A4 des Kipparmes (11) an dem Zylinder (8) zu erlauben, **dadurch gekennzeichnet, dass** das Stützrad (5) über Mittel zur einfach umkehrbaren Verbindung (20) mit dem Kipparm (11) verbunden ist, so dass die Verbindung beim Übergang zwischen der Arbeitsstellung und einer Fahrstellung, in der das Stützrad (5) frei um eine koaxial zu der Schwenkwelle (7) verlaufende Drehachse A3 schwenkbar gelenkig verbunden ist, gelöst werden kann.

2. Vorrichtung zur Befestigung eines Stützrades an dem Pflugrahmen eines Kehrpfluges nach Anspruch 1, **dadurch gekennzeichnet, dass** der Kipparm (11) mit dem Kopf der Stange (10) des Zylinders (8) gelenkig verbunden ist, während das Gehäuse (9) des Zylinders (8) mit dem Pflugrahmen (11) gelenkig verbunden ist, so dass die allgemeine Verlängerungsachse des Zylinders (8) in der gemeinsamen Halteebene enthalten ist.

3. Vorrichtung zur Befestigung eines Stützrades an dem Pflugrahmen eines Kehrpfluges nach Anspruch 1 oder nach Anspruch 2, **dadurch gekennzeichnet, dass** die Mittel zur einfach umkehrbaren Verbindung (2) als Stiftverbindung (20) des Stützrades (5) an der Schwenkwelle (7) ausgebildet sind.

4. Vorrichtung zur Befestigung eines Stützrades an dem Pflugrahmen eines Kehrpfluges nach Anspruch 3, **dadurch gekennzeichnet, dass** das Stützrad (5) über eine Halterung (6), die mit einem das Stützrad (5) tragenden Radarm (17) verbunden ist, von der Schwenkwelle (7) gehalten wird, wobei die Halterung (6) eine Hülse (18) für ihre koaxiale Verbindung mit der Schwenkwelle (7) umfasst, wobei die Mittel zur einfach umkehrbaren Verbindung einen lösbaren Stift (20) umfassen, um abwechselnd entweder in der Arbeitsstellung die Hülse (18) durch Drehung mit der Schwenkwelle (7) zu verbinden oder in der Fahrstellung die Hülse (18) durch Drehung von der Schwenkwelle (7) zu lösen.

5. Vorrichtung zur Befestigung eines Stützrades an dem Pflugrahmen eines Kehrpfluges nach Anspruch 4 **dadurch gekennzeichnet, dass** die Halterung (6) zudem einen Zwischenkopf (19) zur Befestigung des Radarmes (17) an der Hülse (18) umfasst, wobei der Befestigungskopf (19) zwischen zwei der Arbeitsstellung und der Fahrstellung entsprechenden Stellungen betätigbar ist, wobei der Befestigungskopf (19) in jeder der Stellungen mit der Hülse (18) verbindbar ist, in denen die Drehachse (C) des Stützrades (5) in der Arbeitsstellung im Wesentlichen parallel zu der Achse A3 und in der Fahrstellung im Wesentlichen senkrecht zu der Achse A3 ausgerichtet ist.

6. Vorrichtung zur Befestigung eines Stützrades an dem Pflugrahmen eines Kehrpfluges nach den Ansprüchen 1 bis 5, **dadurch gekennzeichnet, dass** die Mittel zur Begrenzung des Hubs eine Fassung (12) umfassen, die den Kipparm (11) und einen Schieber (15), der entlang dem Gehäuse (9) des Zylinders (8) beweglich angebracht und in einer vorbestimmten Stellung feststellbar ist, zueinander in Beziehung setzt.

7. Vorrichtung zur Befestigung eines Stützrades an dem Pflugrahmen eines Kehrpfluges nach Anspruch 6, **dadurch gekennzeichnet, dass** der Schieber (15) beim Ausfahren der Stange des Zylinders (8) ein Anschlagmittel für die Fassung (12) darstellt.

8. Vorrichtung zur Befestigung eines Stützrades an dem Pflugrahmen eines Kehrpfluges nach einem der Ansprüche 6 bis 7, **dadurch gekennzeichnet, dass** der Schieber (15) beim Ausfahren der Stange des Zylinders (8) einen Endschalter darstellt, der von der Fassung (12) betätigbar ist, um die Zufuhr von Hydraulikflüssigkeit zu dem Zylinder (8) zu unterbrechen.

9. Vorrichtung zur Befestigung eines Stützrades an dem Pflugrahmen eines Kehrpfluges nach einem der Ansprüche 7 bis 8, **dadurch gekennzeichnet, dass** der Schieber (15) von einer Mutter gebildet ist, die mit einem an dem Gehäuse (9) des Zylinders (8) angebrachten Außengewinde zusammenwirkt.

10. Vorrichtung zur Befestigung eines Stützrades an dem Pflugrahmen eines Kehrpfluges nach einem der Ansprüche 6 bis 7, **dadurch gekennzeichnet, dass** die Fassung (12) an ihrem Scheitelpunkt an der Schwenkachse des Kipparmes (11) an dem Kopf der Stange (10) des Zylinders (8) zur Anlage kommt und an ihrem unteren Teil einen an dem Schieber (15) zur Anlage kommenden Sockel (14) umfasst, wobei der Sockel (14) frei gleitend auf das Gehäuse (9) des Zylinders (8) geschoben ist.

11. Vorrichtung zur Befestigung eines Stützrades an dem Pflugrahmen eines Kehrpfluges nach Anspruch 10, **dadurch gekennzeichnet, dass** die Fassung (12) und das Gehäuse (9) des Zylinders (8) zudem koaxial mit dem Pflugrahmen (1) gelenkig verbunden sind.

12. Vorrichtung zur Befestigung eines Stützrades an dem Pflugrahmen eines Kehrpfluges nach Ansprüchen 6 bis 11, **dadurch gekennzeichnet, dass** die Fassung (12) käfigförmig ausgebildet ist und
*) an ihrem Scheitelpunkt einen Flansch (13) zum Erfassen der Schwenkachse des Kipparmes (11) an der Stange (10) des Zylinders (8) umfasst, wobei der Flansch (13) um die Schwenkachse schwenkbar ist,
*) an ihrem unteren Teil den Sockel (14) umfasst, der frei gleitend auf das Gehäuse (9) des Zylinders (8) geschoben ist,
*) in ihrem Mittelbereich um das Gehäuse (9) des Zylinders (8) einen Ring (16) umfasst, über den die Fassung (12) und das Gehäuse (9) des Zylinders (8) gemeinsam mit dem Pflugrahmen (1) gelenkig verbunden sind.

13. Vorrichtung zur Befestigung eines Stützrades an dem Pflugrahmen eines Kehrpfluges nach einem der Ansprüche 1 bis 2, **dadurch gekennzeichnet, dass** die Mittel zur Begrenzung des Hubs Steuerungs- und Bedienungselemente zur Betätigung des Zylinders (8) umfassen, wobei die Steuerungs- und Bedienungselemente Elemente zur Begrenzung des Hubs der Stange (10) des Zylinders (8) und Fernbedienungselemente, die in der Kabine der Zugmaschine untergebracht sind, einander zuordnen.
